# FASCICULE DE BREVET EUROPEEN

(11) **EP 1 911 353 B1**
(45) Date de publication et mention de la délivrance du brevet: **27.07.2011**
(21) Numéro de dépôt: 07370022.1
(22) Date de dépôt: 12.10.2007
(51) Int. Cl.: A23B 7/06, A23N 12/04

(54) **Procédé de traitement; notamment de blanchiment et/ou de cuisson de produits alimentaires en vrac**
Behandlungsverfahren; insbesondere zum Blanchieren und/oder Kochen von losen Lebensmitteln
Processing method; in particular blanching and/or cooking of food products in bulk

(30) Priorité: 12.10.2006 FR 0608946
(43) Date de publication de la demande: 16.04.2008
(73) Titulaire: Bonduelle Société Anonyme, 59173 Renescure (FR)
(72) Inventeur: Maureaux, Alain, 59173 Renescure (FR); Luchini, François, 59173 Renescure (FR)
(74) Mandataire: Boubal, Denis Henri Jacques

(56) Documents cités:
- EP-A1- 0 073 095
- EP-A1- 0 498 972
- EP-A1- 0 601 952
- EP-A1- 0 760 214
- US-A- 4 702 161
- US-B1- 6 263 785

## Description

La présente invention a pour objet un procédé de traitement, notamment de blanchiment et/ou de cuisson de produits alimentaires, ainsi qu'une installation pour la mise en oeuvre de ce procédé.

L'industrie de la conservation des produits alimentaires est une activité qui nécessite le traitement de ces produits avant leur commercialisation.

En général, la préparation des produits alimentaires requiert la mise en oeuvre d'étapes de traitement thermique par chauffage qui doivent répondre à certains critères techniques, tout en respectant l'intégrité des propriétés des produits alimentaires, c'est-à-dire notamment leur couleur, leur saveur, leur qualité nutritive et organoleptique, leur texture et l'intégralité de leur forme.

Pour neutraliser les enzymes contenues dans les produits alimentaires et, notamment, dans les légumes, afin d'obtenir une bonne qualité de conservation de ceux-ci, on réalise une étape de chauffage communément appelée blanchiment préalablement à leur préparation.

Une autre méthode traditionnelle de conservation des produits alimentaires est la cuisson. La cuisson des aliments hors récipients consiste à plonger ces légumes dans un bain d'eau chauffée, comme pour le blanchiment, et à les y maintenir par immersion pendant un certain temps.

On connaît également des procédés dans lesquels le bain d'eau chauffée est remplacé par une douche d'eau chaude.

Toutefois, souvent le blanchiment et la cuisson des aliments selon les méthodes connues confèrent à ceux-ci un aspect hétérogène en couleur et en texture, et diminuent la qualité du produit.

En outre, le séjour prolongé des légumes dans l'eau de cuisson réduit leur poids, ce qui conduit à une perte non négligeable des produits alimentaires. Une telle perte en produits alimentaires accroît considérablement le prix de revient de fabrication de ces surgelés et donc leur prix de vente.

Pour remédier à ces inconvénients, on connaît un procédé de blanchiment et de cuisson utilisant uniquement de la vapeur pulsée à travers une couche de légumes reposant sur un tapis. Cela étant, ce principe présente quelques inconvénients, notamment un blanchiment ou une cuisson non maîtrisé, selon l'emplacement des légumes et selon l'épaisseur de la couche de légumes. En particulier, un des problèmes rencontrés avec ce procédé est le fait que les légumes placés en vrac sur un tapis sont blanchis au-dessus de la couche, mais pas sur l'ensemble de la couche.

Par ailleurs, les procédés de blanchiment et de cuisson actuels sous pression utilisent comme fluide caloporteur de l'eau surchauffée, en bain ou en douche, qui provoque un lessivage important des produits et entraînent une dissolution importante de composés de type vitamines, sels minéraux, etc.

On connaît du document EP-0.601.952 un procédé de traitement thermique de produit alimentaire par contact direct avec un fluide caloporteur. Le fluide caloporteur est soit de la vapeur d'eau pulsée, soit de l'eau chaude.

On connaît du document US-4.702.161 une installation de blanchiment de légumes par contact direct avec un fluide caloporteur. Le fluide caloporteur est constitué uniquement par de l'eau chaude pulvérisée. L'eau utilisée dans la zone de traitement thermique est recyclée.

La présente invention a pour objet de remédier aux inconvénients des procédés de traitement thermique, notamment de blanchiment et de cuisson des légumes, actuellement connus en fournissant un procédé et une installation qui permettent de blanchir ou de cuire les légumes tout en conservant leur intégrité de couleur, de saveur et des qualités nutritives et organoleptiques.

Un autre but de la présente invention est d'avoir un blanchiment ou une cuisson homogène sur l'ensemble de la couche de légumes.

Un autre but de la présente invention est de réaliser le blanchiment ou la cuisson de produits alimentaires en gardant une optimisation parfaite de transfert thermique.

Un autre but de la présente invention est de proposer une installation de conception hygiénique et de nettoyage facile.

D'autres buts et avantages de la présente invention apparaîtront au cours de la description qui va suivre qui n'est donnée qu'à titre indicatif et qui n'a pas pour but de la limiter.

L'invention concerne un procédé de traitement, notamment de blanchiment et/ou de cuisson, de produits alimentaires placés en vrac en couche sur un convoyeur à l'intérieur d'une enceinte de traitement, pendant lequel procédé lesdits produits alimentaires sont transportés en continu et au moins chauffés, pendant un temps donné et une pression donnée.

Selon l'invention, on chauffe lesdits produits alimentaires placés en vrac en couche avec une hauteur allant jusqu'à 250 mm et dont la densité est comprise entre 700 et 800 kg/m³, pendant un temps compris entre 30 s et 15 min, par contact direct avec un fluide caloporteur constitué d'un mélange de vapeur d'eau et d'eau liquide chaude sous forme de microgouttelettes, le mélange étant forcé au travers de ladite couche desdits produits alimentaires en prévoyant un flux pulsé pour créer une pression au-dessus de ladite couche de produits alimentaires et compenser les pertes de charge engendrées par la couche, afin d'engendrer un traitement homogène desdits produits dans la couche.

La présente invention concerne également une installation de traitement, notamment de blanchiment et/ou de cuisson, de produits alimentaires placés en vrac en couche sur un convoyeur, conçue pour la mise en oeuvre du procédé tel que décrit dans la présente invention, ladite installation présentant une enceinte comprenant des moyens pour contrôler la pression à l'intérieur de ladite enceinte, des moyens pour transporter lesdits produits alimentaires à l'intérieur de ladite enceinte en continu, et des moyens pour soumettre lesdits produits à une température élevée pendant un temps donné et une pression donnée.

Selon la présente invention, ladite installation présente en outre des moyens pour créer un fluide caloporteur constitué d'un mélange de vapeur d'eau et d'eau liquide chaude sous forme de microgouttelettes, et des moyens pour forcer ledit fluide au travers de ladite couche desdits produits alimentaires.

L'invention sera mieux comprise à la lecture de la description suivante, qui développe ses avantages et certains de ses modes de réalisation, accompagnée des dessins en annexe parmi lesquels:
- la figure 1 illustre de manière partielle et schématique le procédé conforme à l'invention pour le traitement des produits alimentaires,
- la figure 2 représente une vue schématique transversale conformément à la présente invention d'une installation selon un premier mode de réalisation,
- la figure 3 représente de façon schématique longitudinalement une installation conformément à la présente invention et selon le premier mode de réalisation,

- la figure 4 représente de façon schématique une installation conformément à la présente invention et selon un deuxième mode de réalisation,
- la figure 5 représente de façon schématique un convoyeur pour le transport des produits alimentaires à traiter.

L'invention concerne tout d'abord un procédé de traitement, notamment de blanchiment et/ou de cuisson, de produits alimentaires 1 placés en vrac en couche 2 sur un convoyeur 3 à l'intérieur d'une enceinte 4 de traitement, dans lequel lesdits produits alimentaires 1 sont transportés en continu et au moins chauffés, pendant un temps donné et une pression donnée.

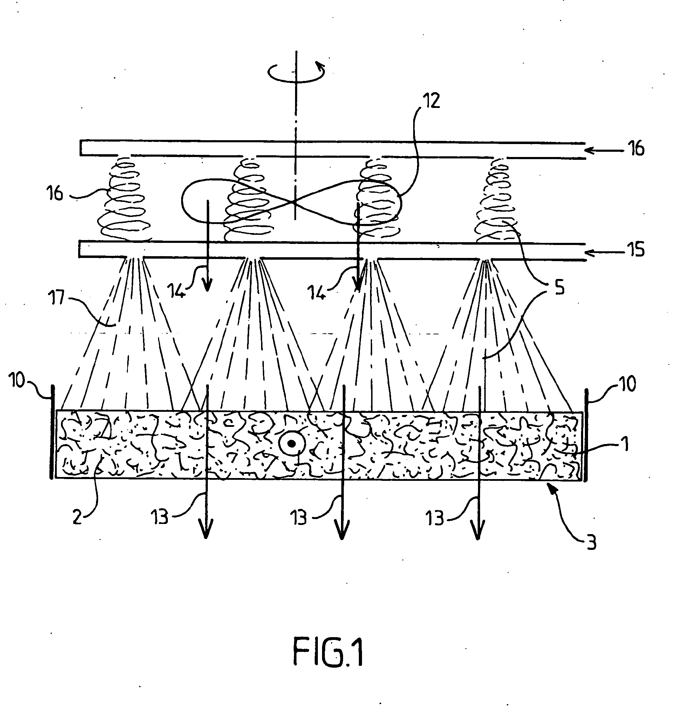

Tel que montré à la figure 1, on chauffe lesdits produits alimentaires 1, placés en vrac en couche avec une hauteur allant jusqu'à 250 mm et dont la densité est comprise entre 700 et 800 kg/m³, pendant un temps compris entre 30 s et 15 min, par contact direct avec un fluide caloporteur, schématisé en 5, constitué d'un mélange de vapeur d'eau 16 et d'eau liquide chaude 15, le mélange étant forcé au-travers de ladite couche 2 desdits produits alimentaires 1, afin d'engendrer un traitement homogène desdits produits 1 dans la couche 2.

Un des avantages de la présente invention repose sur l'ajout dans la zone de blanchiment, par rapport à un blanchiment connu vapeur, d'un arrosage par eau surchauffée brumisée et pulsée dans des températures supérieures à 100 °C. Ceci permet donc d'avoir un blanchiment ou une cuisson homogène sur l'ensemble de la couche de légumes en réalisant une optimisation parfaite de transfert thermique.

A titre d'exemple non limitatif, la quantité d'eau liquide employée est comprise entre 0 et 2 m³ par tonne de produit alimentaire et, plus particulièrement, entre 0 et 0,5 m³ par tonne de produit alimentaire.

Selon la présente invention, comme montré à a figure 1, on force, selon les flèches schématisées repérées 13, au travers de ladite couche 2 de produits alimentaires 1 ledit fluide 5 caloporteur en prévoyant un flux pulsé, schématisé selon les flèches repérées 14, pour créer une pression au-dessus de ladite couche 2 de produits alimentaires 1 et compenser les pertes de charge engendrées par la couche 2.

Telle que montrée, particulièrement à la figure 1, la pression créée au-dessus de ladite couche 2 de produits alimentaires 1 est effectuée à l'aide d'un ventilateur 12 notamment associé à un variateur de vitesse pour adapter les caractéristiques du ventilateur à la chargé créée par ladite couche.

Ceci permet d'optimiser l'échange thermique sur toute la hauteur de la couche 2 desdits produits alimentaires 1 à traiter et de parfaire les consommations d'eau et de vapeur.

Tel que montré à la figure 1, et comme déjà mentionné précédemment, le fluide 5 est constitué d'un mélange de vapeur d'eau 16 et d'eau liquide 15 chaude, transformée sous forme de micro gouttelettes 17, dite eau chaude brumisée, qui arrivent dans la zone du ventilateur 12 afin de se mélanger et former ledit flux 14 pulsé.

A titre d'exemple comparatif entre un procédé connu, mettant en oeuvre la vapeur seule, et le procédé de la présente invention, mettant en oeuvre un fluide caloporteur constitué d'un mélange de vapeur d'eau et d'eau brumisée chaude, on notera une meilleure adaptation et homogénéisation du coefficient de transfert entre le haut et le bas de la couche de produit traité, à savoir notamment pour les mêmes autres paramètres :

| Coefficients de transfert (W/m²/°C) | Procédé connu : Vapeur seule | Invention : Vapeur + Eau brumisée |
|---|---|---|
| Haut de couche | 2460 | 718 |
| Bas de couche | 285 | 416 |

Autrement dit, on note, selon la présente invention, un coefficient plus faible en haut de couche, ce qui évite de surchauffer les produits, et plus fort en bas de couche, ce qui évite de sous chauffer les produits.

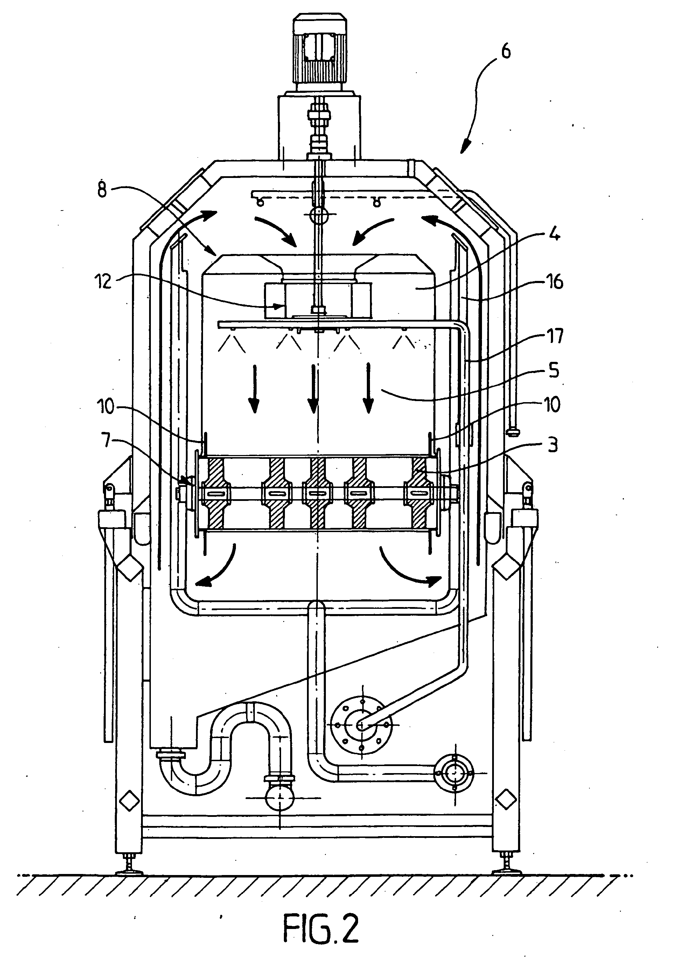

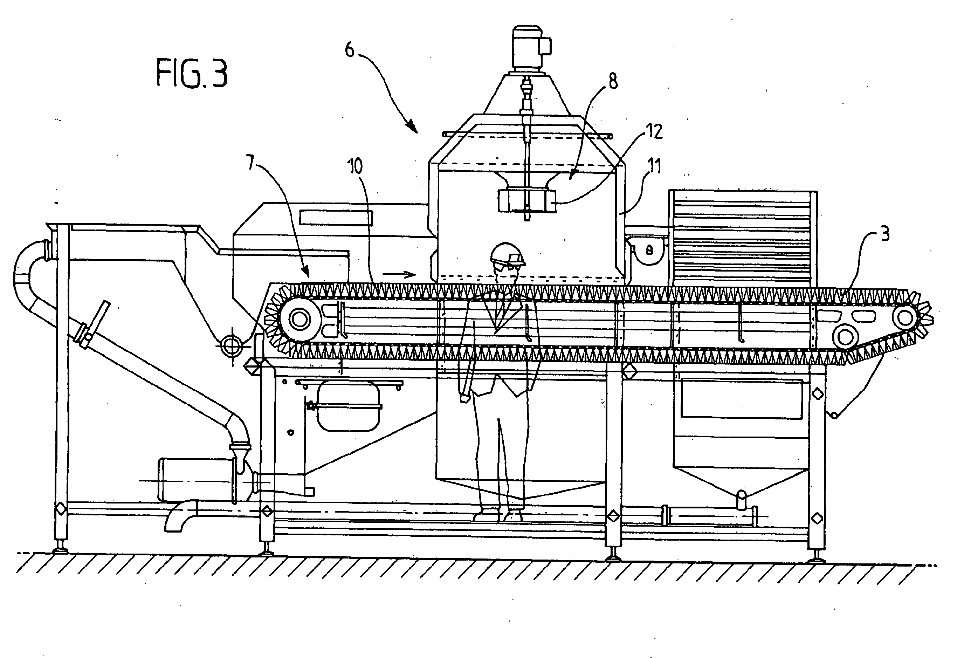

Selon un premier mode de réalisation, telle que montrée aux figures 2 et 3, la pression à l'intérieur de ladite enceinte 4 de traitement est au moins égale à la pression atmosphérique.

En effet, afin d'obtenir un blanchiment ou une cuisson homogène sur l'ensemble de la couche 2 des produits alimentaires 1 en réalisant une optimisation parfaite de transfert thermique, le procédé tel que décrit dans la présente invention est réalisé au moins à une pression égale à la pression atmosphérique, ou avec une légère surpression de la zone de blanchiment, afin de permettre à l'eau 15 surchauffée brumisée de ne pas s'évaporer et de rester en micro gouttelettes 17 jusqu'au contact avec les produits alimentaires 1.

L'avantage de réaliser le procédé tel que décrit dans la présente invention, à une pression atmosphérique ou en légère surpression dans la zone de blanchiment, est de permettre à l'eau surchauffée brumisée, ne s'évaporant pas et restant en micro gouttelettes, de subsister jusqu'au contact avec les produits alimentaires 1. Ceci est très important car c'est grâce aux micro-gouttelettes que l'échange thermique entre la vapeur d'eau, l'eau et les produits alimentaires 1 est accéléré et maîtrisé.

Un autre avantage de la présence de micro gouttelettes 17 pendant le blanchiment est de permettre un arrosage régulier et homogène permettant d'optimiser le traitement thermique sur l'ensemble de la surface du blancheur.

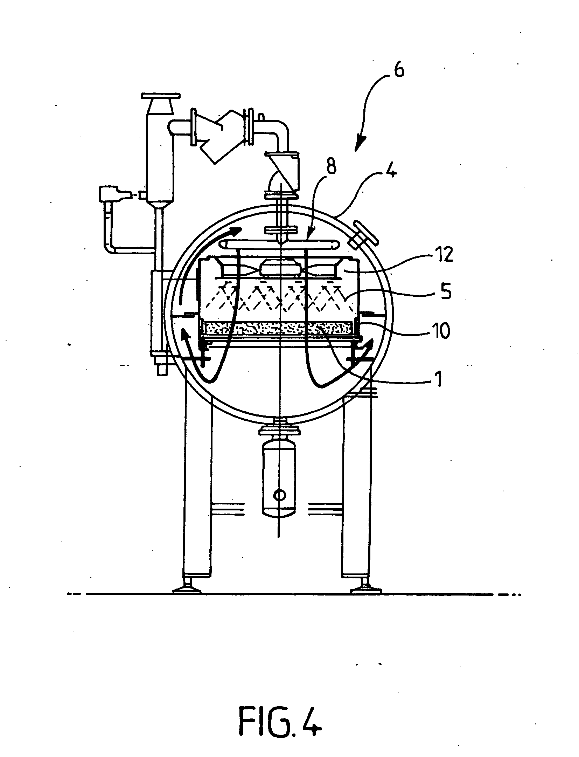

Selon un deuxième mode de réalisation, tel que montré à la figure 4, le procédé de traitement desdits produits alimentaires est effectué dans un autoclave avec une pression à l'intérieur de ladite enceinte 4 de traitement supérieure à la pression atmosphérique.

Dans ce cas, l'enceinte 4 telle que montrée à la figure 4 est étanche, permettant d'atteindre une pression à l'intérieur supérieure à la pression atmosphérique et permettant un blanchiment ou une cuisson desdits produits alimentaires 1 utilisant une température plus élevée.

Cela étant, selon la présente invention, la pression produite au-dessus de ladite couche 2 est comprise entre 1.000 et 3.000 Pa, la vitesse engendrée en surface du produit pouvant aller jusqu'à 3 m/sec.

Par ailleurs, et telle que déjà mentionnée ci-dessus, l'eau liquide 15 chaude qui constitue en partie le fluide 5 traversant lesdits produits alimentaires 1 est constituée de micro gouttelettes 17 d'eau de diamètre de l'ordre de 50 à 200 micromètres.

En outre, selon un mode particulier de la présente invention, on a obtenu de bons résultats lorsque les produits alimentaires 1 sont traités avec de l'eau chaude générant les micro gouttelettes, à une température entre 95 et 120 °C.

Si l'on se reporte au premier mode de réalisation, tel que décrit ci-dessus, et tel que montré à la figure 2, la température utilisée pendant le blanchiment sera autour de 100 °C pour une pression à l'intérieur de l'enceinte 4 proche de la pression atmosphérique.

Si l'on se reporte au deuxième mode de réalisation, tel que décrit dans la présente invention, la température utilisée pendant le blanchiment pourra atteindre 120 °C pour une pression à l'intérieur de l'enceinte 4 supérieure à la pression atmosphérique, de l'ordre de 1,2 bar.

On a obtenu de bons résultats, pour une phase de blanchiment de légumes, en faisant séjourner les produits pendant un temps de traitement compris entre 30 secondes et 5 minutes, la couche présentant une hauteur de l'ordre de 50 à 150 mm.

Dans un autre exemple, on a pu cuire des brocolis, placés en couche de l'ordre de 150 à 200 mm, pendant un temps de traitement compris entre 3 minutes et 15 minutes.

La présente invention concerne en outre une installation 6 de traitement, notamment de blanchiment et/ou de cuisson, de produits alimentaires 1 placés en vrac en couche 2 sur un convoyeur 3, conçue pour la mise en oeuvre du procédé tel que décrit ci-dessus.

Telle que montrée aux figures 2 et 4, ladite installation 6 présente une enceinte 4 comprenant des moyens pour contrôler la pression à l'intérieur de ladite enceinte 4, des moyens 7 pour transporter lesdits produits alimentaires 1 à l'intérieur de ladite enceinte 4 en continu, des moyens pour soumettre lesdits produits 1 à une température élevée pendant un temps donné et une pression donnée, des moyens 8 pour créer un fluide 5 caloporteur constitué d'un mélange de vapeur d'eau et de d'eau liquide chaude, et des moyens 12, 14 pour forcer ledit fluide 5 au travers de ladite couche 2 desdits produits alimentaires 1.

Un des avantages de l'installation, telle que décrite dans la présente invention, est le fait qu'elle est de conception hygiénique et de nettoyage facile. En effet, afin d'éviter tout risque d'oxydation, l'installation est intégralement fabriquée en acier inoxydable.

De plus, ladite installation est nettoyable complètement par des canalisations internes qui permettent son nettoyage automatique. L'installation est accessible à tout niveau par des portes, des ouvertures, des trappes, afin de pouvoir introduire des cannes de pulvérisation manuelles pour le nettoyage total de l'installation.

Selon la présente invention, les moyens pour forcer ledit fluide 5 au travers de ladite couche 2, desdits produits alimentaires 1 sont constitués par des moyens pour engendrer un flux 14 pulsé pour créer une pression au-dessus de ladite couche 2 de produits alimentaires 1 et compenser les pertes de charge engendrées par la couche 2.

Selon un mode particulier de la présente invention, les moyens pour transporter lesdits produits alimentaires 1 à l'intérieur de ladite enceinte 4 en continu sont constitués d'un convoyeur 3 mobile se présentant sous la forme d'un tapis perméable.

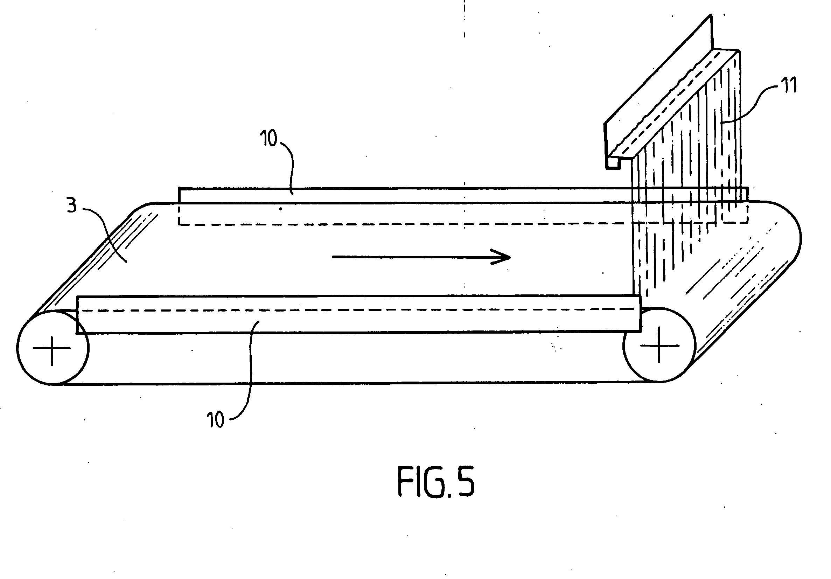

En outre, selon la présente invention, et tel que montré à la figure 5, ledit convoyeur 3 mobile, sous la forme d'un tapis perméable, présente deux parois guides 10 latérales et opposées, s'étendant longitudinalement et vers le haut tout le long du tapis, afin de maintenir lesdits produits alimentaires 1 en vrac sur ledit tapis perméable.

Le tapis perméable peut, à titre d'exemple, présenter des orifices tout au long de sa surface afin de permettre le passage du fluide 5.

Selon un mode particulier de la présente invention, l'installation 6, telle que montrée à la figure 5, peut présenter en outre au moins un rideau d'eau en cascade 11 s'étendant transversalement, et vers le haut, sur toute la longueur dudit tapis perméable.

Un des avantages de la présence d'un tel rideau d'eau en cascade 11, tel que montré à la figure 5, est de permettre d'encadrer et d'orienter le fluide 5 caloporteur constitué d'un mélange vapeur d'eau et d'eau liquide chaude, tel que décrit précédemment.

Un autre avantage de l'utilisation d'un tel rideau d'eau en cascade 11 est de permettre de refroidir les produits alimentaires 1 lors de leur sortie de la zone de blanchiment et/ou de cuisson.

Le débit théorique nécessaire pour assurer l'encadrement et l'orientation du fluide 5 caloporteur et le refroidissement des produits alimentaires 1 est de 3 m³/h. Ce débit peut passer, si nécessaire, à 6 m³/h en fonction de la pression existante au niveau de l'enceinte 4. Ce rideau d'eau en cascade 11 permet en général de faire baisser la température des produits alimentaires à environ 70 °C.

Selon un autre mode particulier de la présente invention, ladite installation 6 peut présenter également un rideau d'air 11.

Selon la présente invention, les moyens 8 pour engendrer ledit flux pulsé 14 sont constitués d'un au moins ventilateur 12 placé à l'intérieur de ladite enceinte 4, et placé au-dessus desdits produits alimentaires 1 à traiter.

En effet, il peut y avoir un ou plusieurs ventilateurs pour chaque zone de traitement, à savoir, une zone de préchauffage, une zone de blanchiment et/ou cuisson et une zone de préfroidissement.

L'utilisation d'un tel ventilateur 12 permet d'avoir une pression variable de 1000 à 3000 Pa et une vitesse sous tapis à vide de 1 à 3 m/sec. De plus, la forme en courbe dudit ventilateur 12 permet de modifier la vitesse d'air sans pour autant faire varier la pression. Ceci présente l'avantage d'assurer le transfert thermique sur toute la couche de produits et en tous points et cela quelle que soit la hauteur de produits alimentaires 1 sur le tapis.

Par ailleurs, selon la présente invention, ladite installation 6 comprend au moins un sas d'entrée et un sas de sortie, non représentés, desdits produits 1 à traiter et réalisés selon des techniques connues, afin d'isoler l'intérieur de l'enceinte de l'ambiance extérieure.

De telles installations permettront avantageusement de mettre en oeuvre des opérations de blanchiment et/ou de cuisson et refroidissement des produits alimentaires et notamment de légumes.

A ce sujet, grâce aux caractéristiques de la présente invention, et notamment au fluide caloporteur pulsé, constitué du mélange vapeur d'eau et eau chaude brumisée, on arrive avec satisfaction à traiter, avec homogénéité, des produits en couche de hauteur importante, notamment jusque 200 mm, et ce du haut en bas de ladite couche.

Cela convient particulièrement au blanchiment de petits pois, type extra fin, à forte masse volumique apparente, comprise notamment entre 600 et 800 kg/m³.

Naturellement, d'autres modes de mise en oeuvre, à la portée de l'homme de l'art, auraient pu être envisagés sans pour autant sortir du cadre de l'invention.

## Revendications

1. Procédé de traitement thermique de blanchiment et/ou de cuisson de produits alimentaires (1) placés en vrac en couche (2) sur un convoyeur (3) à l'intérieur d'une enceinte (4) de traitement, dans lequel procédé lesdits produits alimentaires (1) sont transportés en continu et au moins chauffés, pendant un temps donné et à une pression donnée, **caractérisé en ce qu'**on chauffe lesdits produits alimentaires (1), placés en vrac en couche (2) avec une hauteur allant jusqu'à 250 mm et dont la densité est comprise entre 700 et 800 kg/m³ pendant un temps compris entre 30 s et 15 min, par contact direct avec un fluide (5) caloporteur, constitué d'un mélange de vapeur d'eau (16) et d'eau liquide (15, 17) chaude, sous forme de microgouttelettes (17), le mélange étant forcé au-travers de ladite couche (2) desdits produits alimentaires (1), en prévoyant un flux pulsé (14) pour créer une pression au-dessus de ladite couche (2) de produits alimentaires (1) et compenser les pertes de charge engendrées par la couche (2), afin d'engendrer un traitement homogène desdits produits (1) dans la couche (2).

2. Procédé selon la revendication 1, **caractérisé en ce que** la pression à l'intérieur de ladite enceinte (4) de traitement est au moins égale à la pression atmosphérique.

3. Procédé selon la revendication 1, **caractérisé en ce que** la pression à l'intérieur de ladite enceinte (4) de traitement est supérieure à la pression atmosphérique.

4. Procédé selon la revendication 2, **caractérisé en ce que** ladite pression produite au-dessus de ladite couche (2) est comprise entre 1.000 et 3.000 Pa.

5. Procédé selon la revendication 1, **caractérisé en ce que** le diamètre des microgouttelettes (17) d'eau est de l'ordre de 50 à 200 micromètres.

6. Procédé selon la revendication 1, **caractérisé en ce que** lesdits produits alimentaires (1) sont traités avec de l'eau chaude à une température entre 95 et 120 °C.

7. Procédé selon la revendication 1, **caractérisé en ce que** lesdits produits alimentaires (1) sont traités en couche dont la hauteur est comprise entre 50 et 150 mm pendant des temps de séjour compris entre 30 secondes à 5 minutes

8. Installation (6) de traitement, notamment de blanchiment et/ou de cuisson, de produits alimentaires (1) placés en vrac en couche (2) sur un convoyeur (3), conçue pour la mise en oeuvre du procédé selon la revendication 1 ou 2, ladite installation présentant une enceinte (4) comprenant des moyens pour contrôler la pression à l'intérieur de ladite enceinte (4), des moyens (7) pour transporter lesdits produits alimentaires (1) à l'intérieur de ladite enceinte (4) en continu, et des moyens pour soumettre lesdits produits (1) à une température élevée, pendant un temps donné et une pression donnée, **caractérisée en ce qu'**elle comporte en outre des moyens (8) pour créer un fluide (5) caloporteur, constitué d'un mélange de vapeur d'eau et d'eau liquide chaude, sous forme de microgouttelettes, et des moyens pour forcer ledit fluide (5), au-travers de ladite couche (2) desdits produits alimentaires (1).

9. Installation (6) selon la revendication 8, **caractérisée en ce que** les moyens pour forcer ledit fluide (5) au travers de ladite couche (2) desdits produits alimentaires (1) sont constitués par des moyens pour engendrer un flux pulsé (14) pour créer une pression au-dessus de ladite couche (2) de produits alimentaires (1) et compenser les pertes de charge engendrées par la couche (2).

10. Installation (6) selon la revendication 8, **caractérisée en ce que** les moyens pour transporter lesdits produits alimentaires (1) à l'intérieur de ladite enceinte (5) en continu sont constitués d'un convoyeur (3) mobile se présentant sous la forme d'un tapis perméable.

11. Installation (6) selon la revendication 11, **caractérisée en ce que** ledit convoyeur (3) mobile, sous la forme d'un tapis perméable, présente deux parois guides (10) latérales et opposées, s'étendant longitudinalement et vers le haut tout le long du tapis, afin de maintenir lesdits produits alimentaires (1) en vrac sur ledit tapis perméable.

12. Installation (6) selon la revendication 11, **caractérisée en ce qu'**elle présente en outre au moins un rideau d'eau et/ou air, en cascade (11) s'étendant transversalement, et vers le haut, sur toute la longueur dudit tapis perméable.

13. Installation (6) selon la revendication 9, **caractérisée en ce que** les moyens (8) pour engendrer ledit flux pulsé (14), sont constitués d'un au moins ventilateur (12) placé à l'intérieur de ladite enceinte (4) et placé au-dessus desdits produits alimentaires (1) à traiter.

14. Installation (6) selon la revendication 8, **caractérisée en ce qu'**elle comprend au moins un sas d'entrée et un sas de sortie desdits produits (1) à traiter.

## Claims

1. Method of heat treatment for blanching and/or cooking of food products (1) placed in a bulk layer (2) on a conveyor (3) inside a treatment enclosure (4), in which method said food products (1) are continuously transported and at least heated, for a given time and at a given pressure, **characterised in that** said food products (1) are heated, placed in a bulk layer (2) with a height ranging up to 250 mm and for which the density is between 700 and 800 kg/m³ for 30 s to 15 min, by direct contact with a coolant fluid (5), constituted of a mixture of water vapour (16) and hot liquid water (15, 17), in the form of microdroplets (17), the mixture being forced through said layer (2) of said food products (1), by providing a pulsated flow (14) in order to create a pressure above said layer (2) of food products (1) and to offset the pressure losses generated by the layer (2), in order to generate a homogeneous treatment of said products (1) in the layer (2).

2. Method according to claim 1, **characterised in that** the pressure inside said treatment enclosure (4) is at least equal to the atmospheric pressure.

3. Method according to claim 1, **characterised in that** the pressure inside said treatment enclosure (4) is higher than the atmospheric pressure.

4. Method according to claim 2, **characterised in that** said pressure produced above said layer (2) is between 1,000 and 3,000 Pa.

5. Method according to claim 1, **characterised in that** the diameter of the microdroplets (17) of water is of a magnitude of 50 to 200 micrometres.

6. Method according to claim 1, **characterised in that** said food products (1) are treated with hot water at a temperature between 95 and 120°C.

7. Method according to claim 1, **characterised in that** said food products (1) are treated in a layer of which the height is between 50 and 150 mm during residence times between 30 seconds and 5 minutes.

8. Treatment installation (6), in particular for blanching and/or cooking, of food products (1) placed in a bulk layer (2) on a conveyor (3), designed for the implementation of the method according to claim 1 or 2, said installation having an enclosure (4) comprising means for controlling the pressure inside said enclosure (4), means (7) for transporting said food products (1) inside said enclosure (4) continuously, and means for subjecting said products (1) to a high temperature, for a given time and at a given pressure, **characterised in that** it further comprises means (8) for creating a coolant fluid (5), constituted of a mixture of water vapour and liquid hot water, in the form of microdroplets, and means for forcing said fluid (5), through said layer (2) of said food products (1).

9. Installation (6) according to claim 8, **characterised in that** the means for forcing said fluid (5) through said layer (2) of said food products (1) are constituted by means for generating a pulsated flow (14) in order to create a pressure above said layer (2) of food products (1) and to offset the pressure losses generated by the layer (2).

10. Installation (6) according to claim 8, **characterised in that** the means for transporting said food products (1) inside said enceinte (5) continuously are constituted of a mobile conveyor (3) having the form of a permeable belt.

11. Installation (6) according to claim 11, **characterised in that** said mobile conveyor (3), in the form of a permeable belt, has two lateral and opposite guide walls (10), extending longitudinally and upwards along the entire length of the belt, in order to maintain said food products (1) in bulk on said permeable belt.

12. Installation (6) according to claim 11, **characterised in that** it further has at least one curtain of water and/or air, in cascade (11) extending transversally, and upwards, over the entire length of said permeable belt.

13. Installation (6) according to claim 9, **characterised in that** the means (8) for generating said pulsated flow (14), are comprised of at least one fan (12) placed inside said enclosure (4) and placed above said food products (1) to be treated.

14. Installation (6) according to claim 8, **characterised in that** it comprises at least one entrance chamber and once exit chamber of said products (1) to be treated.

## Patentansprüche

1. Wärmebehandlungsverfahren zum Blanchieren und/oder Garen von Lebensmitteln (1), die lose lagenweise (2) auf eine Fördereinrichtung (3) im Innern eines Behandlungsraumes (4) gelegt werden, wobei bei diesem Verfahren die Lebensmittel (1) durchgehend transportiert werden und mindestens über einen gewissen Zeitraum und bei einem gewissen Druck erhitzt werden, **dadurch gekennzeichnet, dass** die Lebensmittel (1), die lose lagenweise (2) bis auf eine Höhe von bis zu 250 mm gelegt werden und deren Dichte zwischen 700 und 800 kg/m³ liegt, über einen Zeitraum zwischen 30 Sekunden und 15 Minuten durch direkten Kontakt mit einem Wärmeübertragungsfluid (5) erhitzt werden, das aus einer Mischung aus heißem Wasserdampf (16) und flüssigem Wasser (15, 17) in Form von Mikrotropfen (17) besteht, wobei die Mischung durch die Lage (2) der Lebensmittel (1) gepresst wird, indem eine Impulsströmung (14) bereitgestellt wird, um einen Druck über der Lage (2) von Lebensmitteln (1) zu schaffen und die Druckverluste auszugleichen, die durch die Lage (2) hervorgerufen werden, um eine gleichmäßige Behandlung der Lebensmittel (1) in der Lage (2) hervorzurufen.

2. Verfahren nach Anspruch 1, **dadurch gekennzeichnet, dass** der Druck im Innern des Behandlungsraumes (4) mindestens gleich dem Luftdruck ist.

3. Verfahren nach Anspruch 1, **dadurch gekennzeichnet, dass** der Druck im Innern des Behandlungsraumes (4) höher als der Luftdruck ist.

4. Verfahren nach Anspruch 2, **dadurch gekennzeichnet, dass** der Druck, der über der Lage (2) erzeugt wird, zwischen 1000 und 3000 Pa liegt.

5. Verfahren nach Anspruch 1, **dadurch gekennzeichnet, dass** der Durchmesser der Mikrowassertropfen (17) ungefähr 50 bis 200 Mikrometer beträgt.

6. Verfahren nach Anspruch 1, **dadurch gekennzeichnet, dass** die Lebensmittel (1) mit heißem Wasser auf einer Temperatur zwischen 95 und 120 °C behandelt werden.

7. Verfahren nach Anspruch 1, **dadurch gekennzeichnet, dass** die Lebensmittel (1) in einer Lage, deren Höhe zwischen 50 und 150 mm liegt, während Verweilzeiten zwischen 30 Sekunden und 5 Minuten behandelt werden.

8. Behandlungsanlage (6), insbesondere zum Blanchieren und/oder Garen von Lebensmitteln (1), die lose lagenweise (2) auf eine Fördereinrichtung (3) gelegt werden, ausgelegt für die Umsetzung des Verfahrens nach Anspruch 1 oder 2, wobei die Anlage einen Raum (4) aufweist, der Mittel zum Steuern des Drucks im Innern des Raumes (4), Mittel (7) zum durchgehenden Transportieren der Lebensmittel (1) im Innern des Raumes (4) und Mittel zum Aussetzen der Lebensmittel (1) für eine gewisse Zeit und bei einem gewissen Druck an eine hohe Temperatur umfasst, **dadurch gekennzeichnet, dass** sie ferner Mittel (8) zum Schaffen eines Wärmeübertragungsfluids (5), das aus einer Mischung aus heißem Wasserdampf und flüssigem Wasser in Form von Mikrotropfen besteht, und Mittel zum Pressen des Fluids (5) durch die Lage (2) aus Lebensmitteln (1) umfasst.

9. Anlage (6) nach Anspruch 8, **dadurch gekennzeichnet, dass** die Mittel zum Pressen des Fluids (5) durch die Lage (2) aus Lebensmitteln (1) aus Mitteln zum Erzeugen einer Impulsströmung (14) bestehen, um einen Druck über der Lage (2) aus Lebensmitteln (1) zu schaffen und die Druckverluste auszugleichen, die durch die Lage (2) hervorgerufen werden.

10. Anlage (6) nach Anspruch 8, **dadurch gekennzeichnet, dass** die Mittel zum durchgehenden Transportieren der Lebensmittel (1) im Innern des Raumes (5) aus einer beweglichen Fördereinrichtung (3) bestehen, die als durchlässiges Band vorliegt.

11. Anlage (6) nach Anspruch 11, **dadurch gekennzeichnet, dass** die bewegliche Fördereinrichtung (3) als durchlässiges Band zwei seitliche und gegenüberliegende Führungswände (10) aufweist, die sich längsseitig und nach oben an dem ganzen Band entlang erstrecken, um die losen Lebensmittel (1) auf dem durchlässigen Band zu halten.

12. Anlage (6) nach Anspruch 11, **dadurch gekennzeichnet, dass** sie ferner mindestens einen kaskadenartigen Wasser- und/oder Luftvorhang (11) aufweist, der sich quer und nach oben über die gesamte Länge des durchlässigen Bandes erstreckt.

13. Anlage (6) nach Anspruch 9, **dadurch gekennzeichnet, dass** die Mittel (8) zum Erzeugen der Impulsströmung (14) aus mindestens einem Lüfter (12) bestehen, der im Innern des Raumes (4) angeordnet ist und über den zu behandelnden Lebensmitteln (1) angeordnet ist.

14. Anlage (6) nach Anspruch 8, **dadurch gekennzeichnet, dass** sie mindestens eine Eingangsschleuse und eine Ausgangsschleuse der zu behandelnden Lebensmittel (1) umfasst.
